# EUROPÄISCHE PATENTSCHRIFT

(11) **EP 3 363 881 B1**
(45) Veröffentlichungstag und Bekanntmachung des Hinweises auf die Patenterteilung: **01.04.2020**
(21) Anmeldenummer: 17156932.0
(22) Anmeldetag: 20.02.2017
(51) Int. Cl.: C10L 9/08, C10L 5/44, C10B 53/02

(54) **VERFAHREN ZUR DURCHFÜHRUNG EINER HYDROTHERMALEN KARBONISIERUNGSREAKTION**
METHOD FOR PERFORMING A HYDROTHERMAL CARBONISATION REACTION
PROCÉDÉ D'EXÉCUTION D'UNE RÉACTION DE CARBONISATION HYDROTHERMALE

(43) Veröffentlichungstag der Anmeldung: 22.08.2018
(73) Patentinhaber: AVA Green Chemistry Development GmbH, 17390 Murchin-Relzow (DE)
(72) Erfinder: Kusche, Stepan Nicolja, 76669 Bad Schönborn (DE)
(74) Vertreter: Geitz Truckenmüller Lucht Christ

(56) Entgegenhaltungen:
- WO-A1-2009/127727
- DE-B3-102014 215 807
- LI LIANG ET AL: "Using liquid waste streams as the moisture source during the hydrothermal carbonization of municipal solid wastes", WASTE MANAGEMENT, ELSEVIER, NEW YORK, NY, US, Bd. 34, Nr. 11, 26. Juli 2014 (2014-07-26) , Seiten 2185-2195, XP029048491, ISSN: 0956-053X, DOI: 10.1016/J.WASMAN.2014.06.024
- LU XIAOWEI ET AL: "Influence of reaction time and temperature on product formation and characteristics associated with the hydrothermal carbonization of cellulose", BIORESOURCE TECHNOLOGY, ELSEVIER BV, GB, Bd. 138, 1. April 2013 (2013-04-01), Seiten 180-190, XP028543146, ISSN: 0960-8524, DOI: 10.1016/J.BIORTECH.2013.03.163

## Beschreibung

Die vorliegende Erfindung betrifft ein Verfahren zur Durchführung einer hydrothermalen Karbonisierungsreaktion, bei welchem einem Reaktionstank Biomasse zugeführt, durch Einbringen von Dampf die für den Ablauf einer hydrothermalen Karbonisierungsreaktion erforderlichen Reaktionsbedingungen hinsichtlich Druck und Temperatur geschaffen sowie für einen Reaktionszeitraum aufrecht erhalten werden.

Derartige Verfahren sind bereits im Stand der Technik vielfältig bekannt, etwa aus der DE 10 2011 001 954 A1. Diese Schrift sieht vor, während des Ablaufens der hydrothermalen Karbonisierung eine Durchmischung der Biomasse sowie des dieser zugefügten Dampfes vorzunehmen, um aufgrund der Durchmischung eine große Reaktionsfläche und damit eine große Angriffsfläche für Druck und Hitze bereitzustellen. Es hat sich gezeigt, dass hieraus eine deutlich schneller beginnende und gleichmäßiger ablaufende Karbonisierungsreaktion erfolgt.

Basis der hydrothermalen Karbonisierungsreaktion ist die zugeführte Biomasse, welche üblicherweise Lignin enthält, in welchem die zur Karbonisierung vorgesehene Zellulose gebunden ist. Zu Beginn des HTC-Prozesses (hydrothermalen Karbonisierungsprozesses) findet zunächst eine Hydrolyse statt, im Wege derer eine Umwandlung der Zellulose in Glukose stattfindet. Die Glukose ist hierbei im Prozesswasser gelöst. Innerhalb des Prozesses erfordert die Hydrolyse lediglich eine kurze Zeit, etwa ein bis zwei Minuten. Nach der Hydrolyse der Zellulose und deren Umwandlung in Glukose findet dann die eigentliche Karbonisierungsreaktion statt.

Wie im speziellen Fall der oben genannten Schrift beschrieben, wird die eigentliche Karbonisierungsreaktion dort dadurch beschleunigt, dass eine Durchmischung der Biomasse stattfindet. Hierdurch wird dafür gesorgt, dass die erforderlichen Reaktionsbedingungen, nämlich ein Druck von ca. 25 bar und eine Temperatur von etwa 230°C möglichst gleichmäßig für das gesamte zu verarbeitende Material zugänglich werden.

Nach der eigentlichen Karbonisierung erfolgt als praktisch letzter großer Schritt die so genannte Kondensation, bei welcher ein Zusammenschließen der wasserlöslichen Kohlenstoff-Bestandteile zu größeren Molekülen erfolgt. Daraus bildet sich anschließend die HTC-Kohle. Ein Maß für den Feststoffanteil in dem Biomassegemisch, dem so genannten Slurry, ist der Trockenrückstand. Dieser ist definiert als der Anteil an Trockenmasse an der gesamten Masse eines Schlamms.

Im letzten Schritt des Verfahrens wird die entstandene Biokohle von dem ebenfalls entstehenden Prozesswasser getrennt, so dass der Trockenrückstand als Biokohle entnehmbar ist und das Prozesswasser anderer Verwendung zugeführt oder erneut für die Reaktion eingesetzt werden kann. Hierbei ist regelmäßig zu berücksichtigen, dass ein gewisser Anteil an Kohlenstoff in dem Prozesswasser verbleibt.

Es ist ebenfalls zu berücksichtigen, dass eine relativ lange Verweildauer im Reaktionstank, welche eine große Ausbeute an Biokohle ermöglicht, logischerweise zu einer schlechteren Auslastung des Reaktionstanks führt, so dass auch hier eine möglichst kurze Verweildauer im Sinne einer wirtschaftlichen Lösung dienlich wäre.

Gegenstand der vorliegenden Erfindung ist es vor dem Hintergrund dieser Überlegungen, ein Verfahren zur Durchführung einer hydrothermalen Karbonisierungsreaktion vorzuschlagen, welches eine deutliche Verringerung der Verweildauer des Slurry in dem Reaktionstank ermöglicht und gleichzeitig eine höhere Ausbeute an Biokohle und damit eine größere Entfrachtung des Prozesswassers mit sich bringt.

Dies gelingt durch ein Verfahren gemäß den Merkmalen des Anspruchs 1. Weitere sinnvolle Ausgestaltungen eines solchen Verfahrens können den sich anschließenden Unteransprüchen entnommen werden.

Erfindungsgemäß findet ähnlich dem Vorgehen beim Stand der Technik eine hydrothermale Karbonisierungsreaktion in einem Reaktionstank statt, bei dem Biomasse und Wasserdampf zusammengeführt werden. Unter Druck und erhöhter Temperatur karbonisiert die Biomasse und bildet dabei einen Trockenrückstand heraus, der aus dem Schlamm durch Trennen von dem anfallenden Prozesswasser gewonnen werden kann.

Es zeigt sich allerdings, dass der Anteil der nicht wasserlöslichen Kohle, der aus dem Slurry bzw. dem Prozesswasser abgeschieden werden kann, nicht konstant ist und auch nicht monoton steigend verläuft. Vielmehr liegt im ersten Moment zunächst Trockenmasse aus der beigegebenen Biomasse vor, die aber zunächst aufgespalten und karbonisiert werden soll. Mit dem Einsetzen der Karbonisierungsreaktion fällt der Trockenrückstand deutlich ab, da die ursprüngliche Biomasse aufgespalten wird. Mit der einsetzenden Kondensation kehrt sich der Effekt aber wieder um und der Trockenrückstand steigt wieder, wobei nun die begehrte Biokohle als Fracht in dem Slurry enthalten ist. An einem Punkt beginnt jedoch die Biokohle, ihrerseits wieder zu zerfallen und der Trockenrückstand nimmt wieder deutlich ab, um dann bei einer deutlichen Verlängerung des Verfahrens mehr oder weniger konstant zu bleiben.

Um eine möglichst große Ausbeute an Trockenrückstand der Biokohle zu erhalten, muss daher der Zeitpunkt angestrebt werden, zu dem der Trockenrückstand sein Maximum erreicht. Dies ist jedoch problematisch, da der Trockenrückstand als Wert im laufenden Betrieb nicht ohne Weiteres ermittelt werden kann. Zwar kann für bestimmte Materialien durch Testreihen eine ideale Zeit bestimmt werden, doch unterscheiden sich zuführbare Biomaterialien so stark, dass die erforderlichen Testreihen einen unwirtschaftlichen Aufwand bedeuten würden. Dies zumal selbst gleiche Materialien unterschiedlicher Chargen bereits vollkommen unterschiedliche Werte haben können.

Es hat sich jedoch gezeigt, dass der Verlauf des pH-Werts des Slurry in dem Reaktionstank ein Maximum annähernd zur gleichen Zeit besitzt, wie der Verlauf des Trockenrückstands. Im Gegensatz zu dem Trockenrückstand kann jedoch der pH-Wert auch während der laufenden Karbonisierungsreaktion gemessen werden, so dass ein Abbruchsignal für die Reaktion praktisch in Echtzeit generierbar ist, zu einem Zeitpunkt, in dem der Trockenrückstand in dem Slurry am größten und damit die Ausbeute am höchsten ist. Daher wird erfindungsgemäß nicht der Verlauf des Trockenrückstands selbst überwacht, sondern vielmehr der Verlauf des pH-Werts. Sobald während der Karbonisierungsreaktion festgestellt wird, dass ein Maximum des pH-Wertes überschritten ist, wird die Reaktion abgebrochen. Der dann aus dem Reaktionstank zu entnehmende Slurry besitzt den größtmöglichen Trockenrückstand.

Konkret kann dies bewältigt werden, indem der Verlauf des pH-Werts des Slurry zu bestimmten Zeitpunkten erfasst und in einer Datenbank memorisiert wird, und die Messwerte mit den vorangegangenen Werten verglichen werden. Hierzu können eine oder mehrere Messsonden eingesetzt werden, die dem Reaktionstank direkt oder in einer Bypassleitung zugeordnet ist. Die Messwerte der wenigstens eine Messsonde werden durch eine Prozesssteuerung ausgewertet und infolge des Abgleichs mit vorangegangenen Werten ein Maximum des pH-Wertes gesucht. Sobald dieses erreicht ist, wird die Reaktion angehalten.

Die wenigstens eine Messsonde kann auf unterschiedlichen technischen Lösungen beruhen, die im Stand der Technik bekannt sind. Die beiden wesentlichen Lösungen betreffen die Potentiometrie und die Messung mittels ionensensitiver Feldeffekt-Transistoren.

Die Potentiometrie macht sich zu nutze, dass Wasserstoffionen sich an die Oberfläche eines Glasgefäßes anlagern, so dass sich eine galvanische Spannung zwischen der Innen- und der Außenseite des Glasgefäßes aufbaut. Diese ist abhängig von der Differenz der pH-Werte auf beiden Seiten der Oberfläche und kann unter Verwendung von Bezugselektroden gemessen werden.

Bei der Messung mittel Feldeffekt-Transistoren wird der gleiche Effekt ausgenutzt, wobei Wasserstoffionen sich ähnlich wie zuvor beschrieben an einer ionensensitiven Gate-Membran eines ionensensitiven Feldeffekt-Transistors anlagern. Das hierbei entstehende Potenzial lässt sich dann wiederum messtechnisch erfassen.

Mit einigem Vorteil werden solche Messsonden in Bodennähe des Reaktionstanks angebracht, um sicherzustellen, dass er stets in Kontakt mit dem Slurry ist und eine verwertbare Messreihe entsteht.

Durch eine zusätzliche Vermischung kann der Slurry zudem in dem Reaktionstank bewegt, idealerweise aufgewirbelt werden, um die Biomasse möglichst von allen Seiten dem Druck und der Temperatur in dem Reaktionstank möglichst unmittelbar auszusetzen. Hierdurch erfolgt eine gleichmäßigere Reaktion und damit auch eine zuverlässigere Messung des pH-Wertes. Eine Durchmischung kann über den Slurry aufwirbelnde Mischdüsen, oder aber über ein Rührwerk erfolgen.

Um die Messungen nicht zu verfälschen und die Abbruchkriterien nicht zu früh auszulösen, kann eine Messung insbesondere dann beginnen, wenn die Reaktionsbedingungen der hydrothermalen Karbonisierung hinsichtlich Druck und Temperatur erreicht sind und bereits Biomasse und Heißdampf in den Reaktionsbehälter eingebracht wurden. Erst wenn diese Vorgänge abgeschlossen sind, was jedoch auch ohnehin eingangs der Reaktion geschieht, wird die Messung gestartet.

Wird bei Erreichen des Maximums des pH-Werts die Reaktion beendet, so kann dies praktisch dadurch erfolgen, dass der in dem Reaktionstank befindliche Slurry in einen Abkühltank verbracht wird. Die Reaktionsbedingungen können dadurch im Reaktionstank kontinuierlich aufrecht erhalten werden, so dass der Energieverlust möglichst gering bleibt. Der Slurry kann hierzu etwa aus dem Reaktionstank in einen Abkühltank gepumpt werden, oder aber bevorzugtermaßen aufgrund des wesentlich größeren Drucks im Reaktionstank in den Abkühltank mit einem deutlich niedrigeren Druck durch Druckausgleich ausgespült werden.

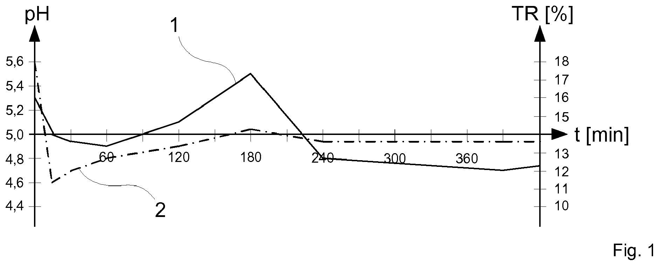

Die vorstehend beschriebene Erfindung wird im Folgenden anhand eines Ausführungsbeispiels näher erläutert. Figur 1 zeigt hierbei ein Schaubild eines exemplarischen Verlaufs 1 des Trockenrückstands in % in einer durchgezogenen Linie, sowie in direktem Bezug dazu den Verlauf 2 des pH-Werts in einer gestrichpunkteten Linie. Die mit pH bezeichnete linke Hochachse zählt den pH-Wert, die mit TR [%] bezeichnete rechte Hochachse den Trockenrückstand in Prozent. Die Längsachse ist eine Zeitachse, wobei die daran angegebenen Zahlen Angaben in Minuten darstellen.

Die hier dargestellte Reaktion beginnt zum Zeitpunkt t = 0 min. Es kann zunächst festgestellt werden, dass eingangs der Reaktion der pH-Wert stark sinkt und bereits bei t = 15 min ein Minimum erreicht. Der Trockenrückstand hingegen sinkt langsamer und erreicht sein Minimum erst etwa bei t = 60 min. von hier aus steigen sowohl der Trockenrückstand als auch der pH-Wert monoton an und erreichen beide bei t = 180 min ein Maximum. Das Schaubild zeigt auch die weitere Entwicklung beider Werte, für den Fall dass die Reaktion nicht erfindungsgemäß geführt wird. Dann nämlich werden pH-Wert und Trockenrückstand deutlich abfallen und etwa bei t = 240 min einen mehr oder weniger konstanten Wert annehmen. Während der Trockenrückstand bei seinem Maximum bis zu 17 % beträgt, liegt er bei einer längeren Dauer im 12 bis 13 %, also gut ein Viertel darunter. Ein erfindungsgemäßer Abbruch der Reaktion bei Erreichen des Maximums des Verlaufs des pH-Werts sorgt jedoch dafür, dass mangels weiterer Reaktion der Trockenrückstand sinkt. Zu diesem Zeitpunkt wird erfindungsgemäß der Slurry aus dem Reaktionstank entnommen, abgekühlt und anschließend vom Prozesswasser getrennt.

Vorstehend beschrieben ist somit ein Verfahren zur Durchführung einer hydrothermalen Karbonisierungsreaktion vorgeschlagen, welches eine deutliche Verringerung der Verweildauer des Slurry in dem Reaktionstank ermöglicht und gleichzeitig eine höhere Ausbeute an Biokohle und damit eine größere Entfrachtung des Prozesswassers mit sich bringt.

### BEZUGSZEICHENLISTE

- 1: Verlauf des Trockenrückstands in %
- 2: Verlauf des pH-Werts
- pH: Skala der ersten Hochachse
- TR [%]: Skala der zweiten Hochachse
- t [min]: Skala der Längsachse

## Patentansprüche

1. Verfahren zur Durchführung einer hydrothermalen Karbonisierungsreaktion, bei welchem einem Reaktionstank Biomasse zugeführt, durch Einbringen von Dampf die für den Ablauf einer hydrothermalen Karbonisierungsreaktion erforderlichen Reaktionsbedingungen hinsichtlich Druck und Temperatur geschaffen sowie für einen Reaktionszeitraum aufrecht erhalten werden,
**dadurch gekennzeichnet, dass** sich während des Reaktionszeitraums aus dem eingebrachten Dampf und der Biomasse ein Slurry bildet, der hinsichtlich des Verlaufs seines pH-Wertes (2) überwacht wird, wobei die Reaktion beendet wird, sobald das Überschreiten eines Maximums dieses pH-Wertes festgestellt wird.

2. Verfahren gemäß Anspruch 1, **dadurch gekennzeichnet, dass** der Verlauf des pH-Werts (2) des Slurry durchgehend oder in diskreten Zeitabschnitten mithilfe wenigstens einer dem Reaktionstank zugeordneten Messsonde ermittelt und in einer Datenbank vermerkt wird, wobei eine Prozesssteuerung einen aktuellen pH-Wert mit vorhergehenden Messwerten aus derselben Messreihe innerhalb des Reaktionszeitraums vergleicht und bei einer Abnahme des pH-Wertes, welche auf eine Anstiegsphase folgt, ein Abbruchsignal setzt.

3. Verfahren gemäß Anspruch 1, **dadurch gekennzeichnet, dass** der Verlauf des pH-Werts (2) des Slurry durchgehend oder in diskreten Zeitabschnitten mithilfe wenigstens einer Messsonde ermittelt wird, die einem Bypassrohr des Reaktionstanks zugeordnet ist, und die pH-Werte in einer Datenbank vermerkt werden, wobei eine Prozesssteuerung einen aktuellen pH-Wert mit vorhergehenden Messwerten aus derselben Messreihe innerhalb des Reaktionszeitraums vergleicht und bei einer Abnahme des pH-Wertes, welche auf eine Anstiegsphase folgt, ein Abbruchsignal setzt.

4. Verfahren gemäß einem der Ansprüche 2 oder 3, **dadurch gekennzeichnet, dass** die wenigstens eine Messsonde in Bodennähe des Reaktionstanks angeordnet wird.

5. Verfahren gemäß einem der vorhergehenden Ansprüche, **dadurch gekennzeichnet, dass** während des Reaktionszeitraums der Slurry in dem Reaktionstank durchmischt wird.

6. Verfahren gemäß einem der vorhergehenden Ansprüche, **dadurch gekennzeichnet, dass** die Messung beginnt, wenn die Reaktionsbedingungen der hydrothermalen Karbonisierung hinsichtlich Druck und Temperatur erreicht sind und bereits Biomasse und Heißdampf in den Reaktionsbehälter eingebracht wurden.

7. Verfahren gemäß einem der vorhergehenden Ansprüche, **dadurch gekennzeichnet, dass** die Reaktion beendet wird, indem der Slurry, durch Pumpen oder aufgrund eines Druckausgleichs, aus dem Reaktionstank in einen Abkühltank verbracht wird.

## Claims

1. A method for carrying out a hydrothermal carbonization reaction, in which biomass is supplied to a reaction tank, and reaction conditions with regard to pressure and temperature necessary for carrying out a hydrothermal carbonization reaction are provided by introducing steam and are maintained for a reaction period,
**characterized in that** during the reaction period, a slurry is formed from the introduced steam and the biomass, and is monitored with regard to the variation in its pH (2) over time, wherein the reaction is terminated as soon as an exceedance of a maximum of this pH is determined.

2. The method according to Claim 1, **characterized in that** the variation in the pH (2) of the slurry over time is determined continuously or at discrete time intervals by use of at least one measuring probe associated with the reaction tank and recorded in a database, wherein a process controller compares an instantaneous pH to previous measured values from the same measurement series within the reaction period, and sets an interrupt signal in the event of a decrease in the pH that follows an increase phase.

3. The method according to Claim 1, **characterized in that** the variation in the pH (2) of the slurry over time is determined continuously or at discrete time intervals by use of at least one measuring probe associated with a bypass tube of the reaction tank, and the pH values are recorded in a database, wherein a process controller compares an instantaneous pH to previous measured values from the same measurement series within the reaction period, and sets an interrupt signal in the event of a decrease in the pH that follows an increase phase.

4. The method according to one of Claims 2 or 3, **characterized in that** the at least one measuring probe is situated in the vicinity of the floor of the reaction tank.

5. The method according to one of the preceding claims, **characterized in that** the slurry is mixed in the reaction tank during the reaction period.

6. The method according to one of the preceding claims, **characterized in that** the measurement begins when the reaction conditions of the hydrothermal carbonization with regard to pressure and temperature are reached, and biomass and superheated steam have already been introduced into the reaction container.

7. The method according to one of the preceding claims, **characterized in that** the reaction is terminated by bringing the slurry from the reaction tank into a cooling tank by pumping or based on a pressure compensation.

## Revendications

1. Procédé pour la mise en œuvre d'une réaction de carbonisation hydrothermale, dans lequel une biomasse est amenée à une cuve de réaction, l'introduction de vapeur permettant de créer les conditions de réaction concernant la pression et la température nécessaires à une réaction de carbonisation hydrothermale et de les maintenir pendant une durée de réaction,
**caractérisé en ce que** pendant la durée de réaction, une bouillie se forme à partir de la vapeur introduite et de la biomasse, qui est surveillée quant à l'évolution de son pH (2), la réaction étant arrêtée dès que le dépassement d'un maximum de ce pH est constaté.

2. Procédé selon la revendication 1, **caractérisé en ce que** l'évolution du pH (2) de la bouillie est déterminée en continu ou par intervalles de temps discrets à l'aide d'au moins une sonde de mesure attribuée à la cuve de réaction et consignée dans une base de données, dans lequel un dispositif de commande de processus compare un pH actuel à des valeurs mesurées précédentes issues de la même série de mesures pendant la durée de réaction et délivre un signal d'annulation en cas de diminution du pH suite à une phase de montée.

3. Procédé selon la revendication 1, **caractérisé en ce que** l'évolution du pH (2) de la bouillie est déterminée en continu ou par intervalles de temps discrets à l'aide d'au moins une sonde de mesure attribuée à un tuyau de dérivation de la cuve de réaction et les valeurs du pH sont consignées dans une base de données, dans lequel un dispositif de commande de processus compare un pH actuel à des valeurs mesurées précédentes issues de la même série de mesures pendant la durée de réaction et délivre un signal d'annulation en cas de diminution du pH suite à une phase de montée.

4. Procédé selon l'une quelconque des revendications 2 ou 3, **caractérisé en ce que** ladite au moins une sonde de mesure est disposée à proximité du fond de la cuve de réaction.

5. Procédé selon l'une quelconque des revendications précédentes, **caractérisé en ce que** la bouillie est malaxée dans la cuve de réaction pendant la durée de réaction.

6. Procédé selon l'une quelconque des revendications précédentes, **caractérisé en ce que** la mesure commence lorsque les conditions de réaction de la carbonisation hydrothermale concernant la pression et la température sont atteintes et de la biomasse et de la vapeur chaude ont déjà été introduites dans la cuve de réaction.

7. Procédé selon l'une quelconque des revendications précédentes, **caractérisé en ce que** la réaction est arrêtée par le transfert de la bouillie de la cuve de réaction à une cuve de refroidissement par pompage ou par suite d'un équilibrage de pression.
